# EUROPEAN PATENT SPECIFICATION

(11) **EP 0 530 153 B1**
(45) Date of publication and mention of the grant of the patent: **05.08.1998**
(21) Application number: 92830280.1
(22) Date of filing: 29.05.1992
(51) Int. Cl.: H04M 3/30

(54) **Intermediate telephone line sectioning device**
Zwischentrennvorrichtung für Fernsprechleitung
Dispositif de sectionnement intermédiaire pour ligne téléphonique

(30) Priority: 29.08.1991 IT RM910642; 01.04.1992 IT RM920230
(43) Date of publication of application: 03.03.1993
(73) Proprietor: CIRTE MANIFATTURIERA S.p.A., I-80133 Napoli (IT)
(72) Inventor: Carnevale, Roberto, I-80131 Napoli (IT)
(74) Representative: Fiammenghi, Carlo

(56) References cited:
- EP-A- 0 072 721
- EP-A- 0 144 072
- DE-A- 3 444 872
- US-A- 3 843 848
- US-A- 4 550 225

## Description

The present invention relates to an intermediate telephone line sectioning device for trouble shooting in the telephone line sections.

According to the known state of art the diagnosis of the telephone line conditions is carried out by equipment located in the work center of the telephone exchange socalled A.C.L. by SIP, the Italian Telephone Company.
By such equipment the electrical parameters of the telephone line from the exchange to the user's telephone set through the telephone network can be monitored. As known such parameters are: low insulation between line wires and to the ground (zero potential), short circuits, breaks and foreign voltages on the line.
Such parameters reflect the internal and external conditions (i.e. relative to the user's line) of the low frequency telephone system.
Such method of the previous state of art requires, however, the intervention of a technician by the user so as to personally establish whether the trouble is to be ascribed to the user's line; the sectioning of the line is manually carried out by the technician himself so as to detect to what section of the telephone line the trouble is to be ascribed, i.e. either the user's line or the tie line.
Of course, the main problem of such method is the labor and traveling cost. Another problem is the time of diagnosis which should be abbreviated.

European patent application 0072721 (Gadonna) relates to an apparatus for the diagnosis of the telephone line conditions which works disconnecting and reconnecting a telephone line in response to different voltage and frequency signals from the telephone exchange. The method of estimating the telephone line conditions includes a plurality of current and voltage measurements, specific for a telephone system.
European patent application 144072 (Fujitsu Limited) relates to a subscriber line radio concentration system which can automatically carry out a loop back test from a master station to a subscriber station.
To attain this functionality in a concentration system of a plurality of subscriber terminal stations, through radio chanels to a master station, at least one of said subscriber terminal station comprises an automatic response equipment. This method applies particularly to radio telephone apparatuses and employes techniques and circuits usual for this kind of telephonic equipment.
An object of the present invention is to provide an intermediate cable telephone line sectioning device which temporally disconnects, detects the sectioning by a signal fed to the telephone exchange and hence, reconnects the line and the subscriber equipment.
It's a further object of the present invention to provide an intermediate telephone line sectioning device which estimate the conditions of the telephone line within a short controlled time period.

The invention such as claimed and illustrated in detail by a particular embodiment solves the problem of providing an almost immediate diagnosis of the line conditions and of establishing on the base of such a diagnosis whether the trouble is to be ascribed to the user's line or not.
Such object is achived by providing the intermediate line disconnecting switch between the user's line and the distribution telephone cable so as to effectively separate the two systems: internal (user) line and external line.
This intermediate telephone line sectioning device placed between the distribution telephone line and the user's line for trouble shooting in the telephone line sections includes:
- means for stabilizing an alternating voltage from the telephone exchange to a predetermined value,
- telephone line sectioning means and an oscillator circuit for generating a sinusoidal voltage confirming that the sectioning and the re-making of the telephone line has occurred,
- capacitive means including a capacitor which is charged by said voltage from the telephone exchange,
- means for generating first and second reference voltages,
- first switching means for switching its output from digital logic "0" to "1" when voltage on said capacitive means overcomes the second reference voltage,
- second switching means for switching its output from digital logic "0" to "1" when said voltage on capacitive means overcomes the first reference voltage,
- first active device formed of a transistor energizing a first coil of a two-step relay, under the control of first switching means, when the latter switches its output from "0" to "1" and thus producing the sectioning of the telephone line of user through the disconnection of two contacts,
- second active device including a second transistor energizing a second coil of the relais, under the control of second switching means, when the latter switches its output from "0" to "1", thus closing said contacts which disconnect the telephone line of the user,
- sectioning means including first and second coil of the relais and feeding (better conveying) the oscillator sinusoidal voltage confirming that the sectioning and the re-making of the telephone line has occurred together with said alternate voltage from the exchange,
- coupling means including a capacitor transmitting the phonic and digital signals with the minimum attenuation, and
- resetting means for setting to zero the value of the voltage at the ends of said capacitive means charged by the alternate voltage from the exchange during the pause between telephone calls.
Another embodyment of the device according to the present invention provides an intermediate telephone line sectioning circuit, placed between the distribution telephone line and the user's line including:
- means for transforming the alternate voltage of the telephone line to a d.c. voltage as well as for stabilizing said voltage and for blocking the d.c. componenet of the telephone line,
- telephone line sectioning means coupled with a buffer oscillator circuit,
- means for supplying a main reference voltage and two very stable secondary voltages,
- means supplied with the main reference voltage for generating the time constant necessary for sectioning and re-making the telephone line,
- means supplied with the secondary voltages for comparing the two secondary voltages supplying at its two outputs as a result of such comparison two logic level switched from 0 to 1 with a delay relative to said generated time constants, and
- means for transforming the voltages at its inputs to a pulse of the order of some milliseconds, the succession of two of such pulses is applied to said telephone line sectioning means for operating the sectioning and the re-making of the telephone line.
The real method according to the present invention, provides an intermediate telephone line sectioning, in which the detection is carried out by suppling a particular voltage from the exchange during a varying time lenght by means of this voltage the intermediate line sectioning device opens the contacts for sectioning the telephone line of users's installation and generates a signal of varying frequency which is added to said sectioning voltage. The method is characterized in that for the detection a main reference voltage and two very stable secondary reference voltages are generated, and these two voltages are applied to a voltage comparator which compares the input voltage with the two reference voltages; the overcoming of the first reference voltage occurs after an adjustable time period, while the overcoming of the second reference voltage occurs after a further adjustable time period generally different from the first period, thus the eventual switching of the logic level of the outputs from 0 to 1 with adjustable delay times is caused, said outputs are applied to a converter generating two pulses (one for each output) having the length of some milliseconds: these two pulses are the sectioning signal and the re-making signal of the telephone line, respectively.

The advantages of the invention consist in that the line diagnosis and trouble shooting time are reduced to the minimum due to the fact that the disconnecting switch of the invention is transparent to the measurement carried out by the control center.

The invention will now be described according to a preferred embodiment by way of a non-limitative example with reference to the drawings, in which:
Fig. 1 shows a schematic view of internal and external telephone line and the placing of the intermediate line sectioning device of the present invention;
Fig. 2 is a block diagram of the circuit of the intermediate line sectioning device including several modules (or components).
Fig. 3 is a detailed circuit diagram of the intermediate line sectioning device according to the present invention;
Fig. 4 is a block diagram of an alternate embodiment of the intermediate line sectioning device according to the invention.

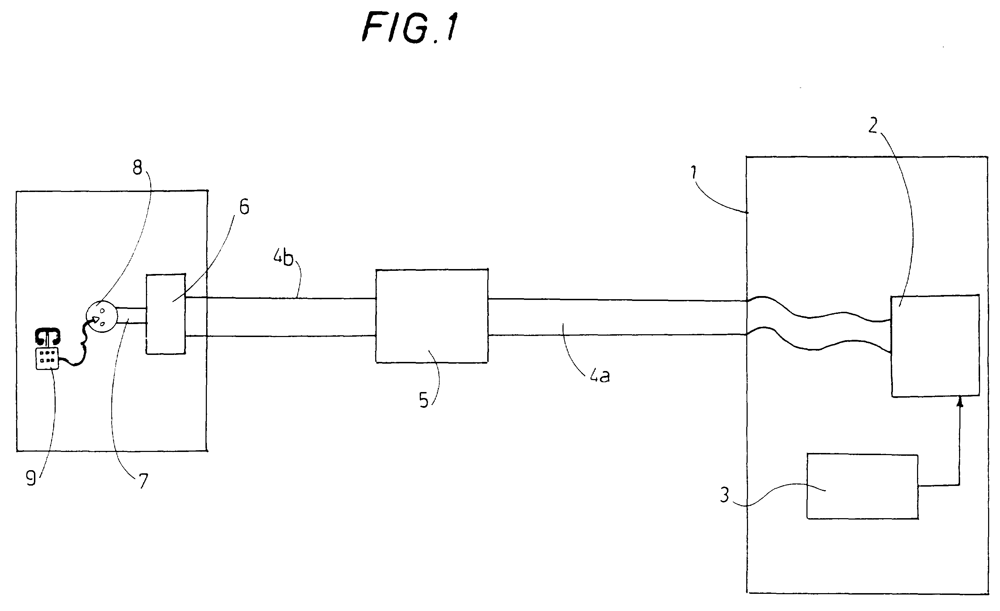

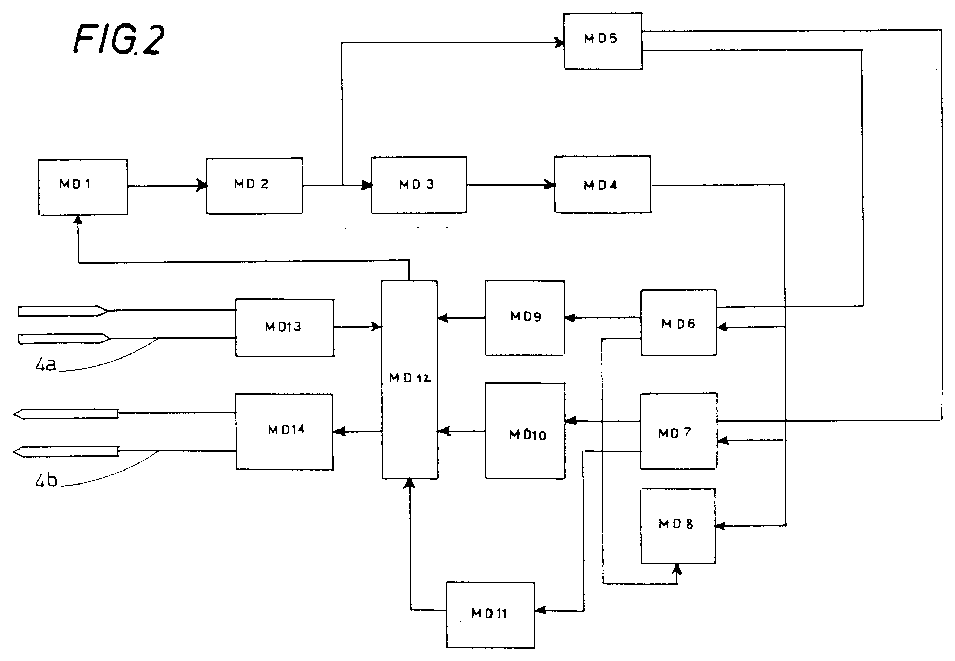

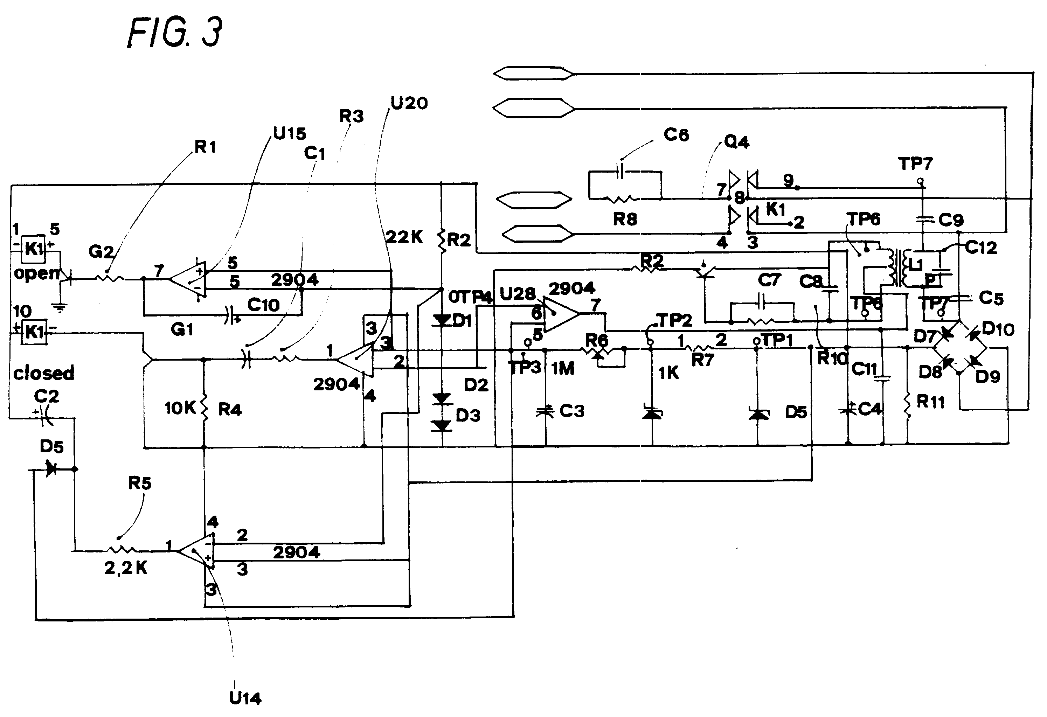

As shown in Fig. 1, telephone exchange 1 includes a module 3 generating an alternate voltage of 70 volts rms at a frequency of 50 Hz and a measuring instrument 2 for the line parameters which in the Italian Telephon Company SIP is called A.C.L. The main telephone line 4a connects telephone exchange 1 to distribution cabinet 5, and the telephone distribution line 4b connects the latter to the external user's line 7 ending in the jack 8 of telephone set 9. The intermediate line disconnecting switch 6 is placed between telephone distribution line 4b and external user's line 7.
When module 3 generates a voltage of 70 volts rms at 50 Hz with a current limited to 80 mA during 2.5 seconds, the intermediate line disconnecting switch 6 opens the contacts sectioning the telephone line of the user's system. Under such circumstances, as described thereafter, the intermediate line disconnecting switch 6 generates a signal at 90 Hz on the telephone lines 4a, 4b. Such signal is detected and coded by module 3.
By generating during 4 seconds the same alternate voltage through module 3, the intermediate line disconnecting switch 6 closes the contacts sectioning the telephone line after the test of the same, as described thereafter.
The signal at 90 Hz fed to the telephone line 4a, 4b is detected by a receiver included in the measuring device 2 and fed through an electronic interface system to the monitors of the operators in the measurement control center, thus signalling that the telephone line is sectioned.
With reference to Fig. 2 there are shown fourteen modules (or components) of the intermediate line disconnecting switch of the present invention, the circuit diagram of which is shown in detail in Fig. 3.
The d.c. component of the telephone line signal is stopped by capacitor C5, and the alternate component from module 3 is rectified by Graetz bridge formed of diodes D7, D8, D9, D10 of the type 1N 4007 included in module MD1.
Module MD2 which is formed of a resistance R11 of 4700 ohms, an electrolytic capacitor C4 of 100 microfarads, and a Zener diode D5 of 12 volts levels through capacitor C11 and stabilizes to 12 volts through Zener diode D5 the pulsating voltage from module MD1.
Module MD3 is formed of resistance R7 of 1000 ohms and Zener diode D4 of 4.7 volts. It stabilizes to V1=4.7 volts the d.c. voltage from module MD2. Such voltage V1=4.7 volts charges the electrolytic capacitor C3 of 10 microfarads during 2.5 seconds (with a tolerance of +0.5 seconds) through resistance R6. The latter two components, resistance R6 and capacitor C3, are included in module MD4 the function of which is of timing to T1=2.5 seconds the sectioning time of the telephone line.
The charging voltage of capacitor C3 is applied to pin 5 of the integrated circuit U2B of the type LM 2904 (forming a half section of the integrated circuit U2 of the type LM 2904).
The charging voltage of capacitor C3 is applied to pin 3 of integrated circuit U2A of the type LM 2904 included in module MD7, said integrated circuit comparing such voltage with a reference voltage V1 which is generated by module MD5 formed of the resistance R2 of 22 kohms and diodes D1, D2, D3 and is applied to pin 2 of the same integrated circuit.
Diodes D1, D2, D3 are of the type 1N 4148.
When the voltage at pin 3 overcomes the reference voltage V1, integrated circuit U2A switches its output at pin 1 from "0" to "1" and together with resistances R3 of 1 kohm, R4 of 10 kohms and a tantalium capacitor C1 of 0.47 microfarad, which components are included in module MD7, supplies the base of a transistor Q1 of the type 2N 2222 included in module MD10 with a positive pulse of short duration, thus causing one of the two coils of a 3 V relay K1 (included in module MD12) to be shortly energized and then the opening of the two contacts of the relay so as to cause the telephone line to be sectioned. Concurrently an operational amplifier U2B of the type LM 2904 included in module MD11 supplies the Hartley oscillator formed of components R9 of 47 ohm, R10 of 39 kohm, C7 of 1 microfarad, C8 of 4700 pF, coil L1, and transistor Q4 of the type 2N 2222, where Rx indicate resistances and Cx capacitors. All of such components are included in module MD11. The characteristics of coil L1 are shown in Table 1.

**TABLE 1**

| Characteristics of coil L1 | |
|---|---|
| Primary winding | 40 turns |
| Secondary winding | 90 + 44 turns |
| Primary inductance | minimum 17 microhenry; maximum 49 microhenry |
| Secondary inductance | minimum 85 microhenry; maximum 490 microhenry |
| Primary resistance | 2.2 ohms |
| Secondary resistance | 6.4 ohms |
| Core | ferrite |

Hartley oscillator generates a sinusoidal wave having a frequency of 90 kHz ± 5 kHz and peak to peak voltage of 5 volts which is fed together with the sectioning voltage of the intermediate disconnecting switch from the control device of the latter mentioned above with reference to Fig. 1 through the primary winding of coil L1 and capacitor C9 of 47000 pF, and through module MD12 formed of the two-step, two-coil relay K1 of 3 volts.
If the sectioning voltage is continuously fed the potential at the terminals of capacitor C3 increases.
Such voltage at pin 5 of integrated circuit U1B LM 2904 of module MD6 is compared with a second reference voltage V3 applied to pin 6 of the same integrated circuit which is provided by the same above described circuit generating the reference voltage. When the voltage at pin 5 overcomes said second reference voltage after about four seconds with a tolerance of + 0.5 seconds, the output of integrated circuit U1B switches from "0" to "1", thus causing transistor Q2 of the type 2N 2222 included in module MD9 to be saturated through resistance R1 of 2.2 kohm and then the second coil of relay K1 to be energized and the previously opened contacts to be closed again.
Module MD8 is formed of half a section of integrated circuit U1A, i.e. the operational amplifier U1A of the type LM 2904 having components R5, C2, D6 associated thereto and operating so as to set to zero the voltage at the ends of capacitor C3 during the pause between telephone calls.
Module MD13 is formed of the discharger TRISIL of the type TPA 130A used to protect the intermediate line disconnecting switch from electrical pulse discharges. In particular it is provided for protecting the intermediate line disconnecting switch from atmospheric discharges which could occur on the telephone lines. It is placed in parallel with the contacts of relay K1. The latter, which is included in module MD12, has the function of sectioning and closing again the telephone line according to control signals from modules MD9 and MD10, as described above.
Finally module MD14 is formed of resistance R8 of 68 kohm and ½ watt and capacitor C6 of 1 microfarad of the polyester type.
The function thereof is of providing a voltage drop of about 6 volts a.c. on the line when the latter is short circuited, said voltage drop being necessary for the operation of the disconnecting switch, while capacitor C6 connected in parallel to resistance R8 has the function of bypassing all of sound and digital signals with the minimum attenuation.
The intermediate line disconnecting switch allows for a back-control of the line break at the user side as thoroughly described with reference to Figs. 1, 2 and 3. High frequency apparatus of the analogue and digital type (Mx, RSS, WCR, negative impedance amplifier of the "ZN" type) should not operate together. An alternate voltage of 70 volts rms and a short circuit current of 80 mA are needed.
The control voltage of 70 volts rms has a frequency of 50 Hz. Therefore the whole assembly has a high signal to noise ratio.

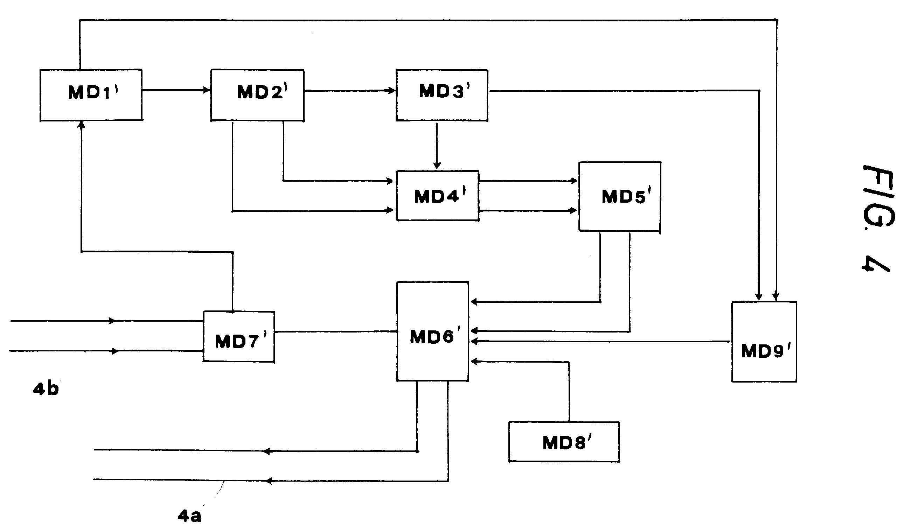

In Fig. 4 there is shown a block diagram of an alternate embodiment of the invention similar to the preceding embodiment except for the particular configuration of the intermediate sectioning block using different operating parameters. In particular, the operating frequencies are reduced to the typical values of the phonic band. In addition, it makes use of a lower operating voltage for the sectioning and the re-making of the line which is kept substatially constant between 18 and 20 Volt rms. Also such intermediate line sectioning device is connected between the telephone line and the user's line as the preceding one. The detection is carried out by supplying the voltage of 18-20 Volt rms at 50-55 Hz from the exchange during a varying time of about 2.5 seconds. As a result of such signal the intermediate line sectioning device opens the contacts for sectioning the telephone line of the user's installation. The sectioning device is resposive to such sectioning operation and generates a signal of varying frequency of 3000 ± 500 Hz which is added to said sectioning voltage of 18-20 Volt at 50-55 Hz. Such signal is detected and coded in the control centre of the telephone exchange. The re-making of the sectioning contacts is due to an alternate voltage fed from the exchange to the sectioning device during a varying time of about 4 ± 0.5 seconds.
The frequency response of 3000 Hz fed from the sectioning device to the telephone line is detected by a receiver of the measuring equipment and transferred through an electronic interface to the monitors of the operators in the control and measurement centre.
In Fig. 4 module MD1' has the function of transforming the alternate voltage of the telephone line to a d.c. voltage and to block the d.c. component of the telephone line. Module MD2' generates a main reference voltage of 2.5 volts and two very stable secondary voltages of 1.37 and 1.98 volts.
Module MD3' generates the time constant necessary for sectioning and re-making the line.
Module MD4' compares the voltage at its input with two reference voltages causing after such comparison the two outputs to be switched from logic 0 to 1 (0-1).
Module MD5' has the function of transforming the voltages at its two inputs to one pulse having the length of some milliseconds.
Module MD6' has the function of sectioning and re-making the telephone line as a result of two pulses applied at its inputs.
Module MD7' has the function of blocking the sectioning voltage preventing it from being fed to the user and of protecting the whole apparatus.
Module MD8' includes a buffer oscillator provided with current amplifier capable to generate a sinusoidal signal.
Module MD9' has the function of resetting the sectioning device and to re-make the telephone line when the user receives a phone call.
As far as the process of detecting the line sectioning and the interconnection of the modules is concerned it should be noted that the alternate control voltage from the interface circuit located in the central exchange is supplied through the telephone line to module MD7', which prevents such voltage from reaching the user, and to module MD1' which rectifies it to a d.c. voltage which is applied to module MD2' thereby generating three reference voltages, two of which are applied to module MD4' and the third to module MD3'. Module MD4' compares in turn the voltage from module MD3' with the previously described reference voltages. As a result of such comparison the two outputs of module MD4' are switched from logic level 0 to 1, the first output after 2.5 seconds, and the second outputs after 3 seconds. Such outputs reach module MD5' which convertes them into two pulses (one for each output) having the length of some milliseconds, which are applied to module MD6' which in turn operates the sectioning of the telephone line by the first pulse and re-makes it by the second pulse. After the sectioning module MD6' transfers the alternate control voltage to module MD8 so that such voltage is supplied to a sinusoidal buffer oscillator having a frequency of 3000 Hz ± 500 Hz and a peak-to-peak amplitude of 3 volts which generates a signal fed through modules MD6' and MD7' to telephone line 4b.
The control voltage is taken from module MD1' and applied to module MD9' which compares it with a reference voltage. If the compared voltage is greater or equal to 22 volts, the logic levels of the two outputs of the latter module are switched so that one of them can reset the timer of module MD3' and the other one re-makes the telephone line through module MD6'.
Also this embodiment of the intermediate telephone line sectioning device of the present invention has all of advantages of the preceding embodiment such as the high sensitivity, the high signal-to-noise ratio, the independence of the inner electric parameters of the user's line, a. s. o.
The device according to the invention operates independently of the electrical parameters of the internal user's line, i.e. short circuit between wires a-b, low insulation between the latter, foreign voltages on the telephone pair, psophometric noise and pulse noise.

## Claims

1. An intermediate telephone line sectioning device placed between the distribution telephone line (4b) and the user's line (7) for trouble shooting in the telephone line sections including:
- means (MD1, MD2, MD3) for stabilizing an alternating voltage from the telephone exchange to a predetermined value (V1),
- telephone line sectioning means (MD12) and an oscillator circuit (MD11) for generating a sinusoidal voltage confirming that the sectioning and the re-making of the telephone line has occurred, characterized in that it further comprises:
- capacitive means (MD4) including a capacitor (C3) which is charged by said voltage from the telephone exchange (V1),
- means (MD5) for generating first and second reference voltages (V2,V3),
- first switching means (MD6) for switching its output from digital logic "0" to "1" when voltage (V1) on said capacitive means (MD4) overcomes the second reference voltage (V3),
- second switching means (MD7) for switching its output from digital logic "0" to "1" when said voltage (V1) on capacitive means (MD4) overcomes the first reference voltage (V2),
- first active device (MD9) formed of a transistor (Q1) energizing a first coil of a two-step relay (K1), under the control of first switching means (MD6), when the latter switches its output from "0" to "1" and thus producing the sectioning of the telephone line of user (7) through the disconnection of two contacts,
- second active device (MD10) including a second transistor (Q2) energizing a second coil of the relais (K1), under the control of second switching means (MD7), when the latter switches its output from "0" to "1", thus closing said contacts which disconnect the telephone line of the user (7),
- sectioning means (MD12) including first and second coil of the relais (K1) and feeding (better conveying) the oscillator (MD11) sinusoidal voltage confirming that the sectioning and the re-making of the telephone line has occurred together with said alternate voltage from the exchange,
- coupling means (MD14) including a capacitor (C6) transmitting the phonic and digital signals with the minimum attenuation, and that it also includes:
- resetting means (MD8) for setting to zero the value of the voltage at the ends of said capacitive means (MD4) charged by the alternate voltage from the exchange during the pause between telephone calls.

2. The intermediate telephone line sectioning device for trouble shooting in the telephone line sections of claiml, characterized in that it also includes further protection means (MD13) formed of a discharger.

3. The intermediate telephone line sectioning device for trouble shooting in the telephone line sections of any of preceding claims, characterized in that said coupling means (MD14) bypassing the phonic and digital signals includes besides said capacitor (C6) a resistance (R8) adapted to cause a voltage drop when the user is short circuited.

4. An intermediate telephone line sectioning device placed between the distribution telephone line (4b) and the user's line (7), for trouble shooting in the telephone line sections, including:
- means (MD1') for transforming the alternate voltage of the telephone line to a d.c. voltage as well as for stabilizing said voltage and for blocking the d.c. component of the telephone line,
- telephone line sectioning means (MD6') coupled with a buffer oscillator circuit (MD8'),
characterized in that it further comprises:
- means (MD2') for supplying a main reference voltage and two very stable secondary voltages,
- means (MD3') supplied with the main reference voltage for generating the time constant necessary for sectioning and re-making the telephone line,
- means (MD4') supplied with the secondary voltages for comparing the two secondary voltages and supplying at its two outputs, as a result of such comparison, two logic levels switched from 0 to 1 with a delay relative to said generated time constants, and
- means (MD5') for transforming the voltages at its inputs to a pulse of the order of some milliseconds, the succession of two of such pulses being applied to said telephone line sectioning means (MD6') for operating the sectioning and the re-making of the telephone line.

5. The intermediate telephone line sectioning device for trouble shooting in the telephone line sections of claim 4, characterized in that the operating voltage of the intermediate line sectioning device is 18-20 volts rms at a frequency of 50-55 Hz for an adjustable length of about 2.5 seconds.

6. The intermediate telephone line sectioning device for trouble shooting in the telephone line sections of claims 4 and 5, characterized in that it includes a module (MD7') for preventing the sectioning voltage from being fed to the user and being adapted to assure and inherent protection of the whole device.

7. The intermediate telephone line sectioning device for trouble shooting in the telephone line sections of claims 4 to 6, characterized in that it includes a module (MD9') adapted to reset the sectioning circuit and to re-make the telephone line when the user receives a phone call.

8. A method of providing an intermediate telephone line sectioning employing a device according to claims 1 or 5, in which the detection is carried out by supplying a particular voltage from the exchange during a varying time length by means of which the intermediate line sectioning device opens the contacts for sectioning the telephone line of users's installation and generates a signal of varying frequency which is added to said sectioning voltage, characterized in that to detect the sectioning a main reference voltage and two very stable secondary reference voltages are generated, said two voltages being applied to a voltage comparator which compares the input voltage with the two reference voltages, the overcoming of the first reference voltage (V2) occurring after an adjustable time period (T1), while the overcoming of the second reference voltage (V3) occurring after a further adjustable time period (T2) generally different from the first period, thus causing the eventual switching of the logic level of the outputs from 0 to 1 with adjustable delay times, said outputs being applied to a converter generating two pulses (one for each output) having the length of some milliseconds, said two pulses being the sectioning signal and the re-making signal of the telephone line, respectively.

9. The method of providing an intermediate telephone line sectioning of claim 8, wherein the main reference voltage is 2.5 volt and the secondary reference voltages are 1.37 and 1.98 volts, respectively.

10. The method of providing an intermediate telephone line sectioning of claim 8, characterized in that the sectioning signal operates a buffer oscillator generating a sinusoidal signal at 3000 Hz (± 500 Hz) which is supplied through the telephone line to the exchange for its monitoring, and that it is provided a comparison with a reference voltage for the eventual restoring of the logic levels for resetting the timer and re-making the telephone line when the user receives a phone call.

## Patentansprüche

1. Zwischentrennvorrichtung für Telefonleitung, welche zwischen der Verteilertelefonleitung (4b) und der Teilnehmerleitung (7) angeordnet ist, zur Störungssuche in den Telefonleitungsabschnitten dient und aufweist:
- Einrichtungen (MD1,MD2,MD3) zur Stabilisierung einer Wechselspannung von der Telefonzentrale auf einen vorbestimmten Wert (V1),
- eine Telefonleitungs-Trenneinrichtung (MD12) und eine Oszillatorschaltung (MD11) zur Erzeugung einer sinusförmigen Spannung, die bestätigt, daß die Trennung und die Wiederherstellung der Telefonleitung eingetreten ist, dadurch gekennzeichnet, daß die Vorrichtung ferner aufweist:
- eine kapazitive Einrichtung (MD4) mit einen Kondensator (C3), der durch die Spannung von der Telefonzentrale (V1) geladen wird,
- eine Einrichtung (MD5) zur Erzeugung einer ersten und zweiten Bezugsspannung (V2,V3),
- eine erste Schalteinrichtung (MD6) zum Umschalten ihres Ausgangssignals vom digitalen Logikwert "0" auf "1", wenn die Spannung (V1) an der kapazitiven Einrichtung (MD4) die zweite Bezugsspannung (V3) übersteigt,
- eine zweite Schalteinrichtung (MD7) zum Umschalten ihres Ausgangssignals vom digitalen Logikwert "0" auf "1", wenn die Spannung (V1) an der kapazitiven Einrichtung (MD4) die erste Bezugsspannung (V2) übersteigt,
- eine erste aktive Vorrichtung (MD9), die aus einem Transistor (Q1) besteht, welcher eine erste Spule eines Zweistufenrelais (K1) unter der Steuerung der ersten Schalteinrichtung (MD6) erregt, wenn die letztere ihr Ausgangssignal von "0" auf "1" umschaltet, wodurch die Trennung der Telefon-Teilnehmerleitung (7) durch Trennung der zwei Kontakte hervorgerufen wird,
- eine zweite aktive Vorrichtung (MD10) mit einem zweiten Transistor (Q2), der eine zweite Spule des Relais (K1) unter der Steuerung der zweiten Schalteinrichtung (MD7) erregt, wenn die letztere ihr Ausgangssignal von "0" auf "1" umschaltet, wodurch die Kontakte geschlossen werden, die die Telefon-Teilnehmerleitung (7) abtrennen,
- eine Trenneinrichtung (MD12), welche die erste und zweite Spule des Relais (K1) enthält und die Sinusspannung des Oszillators (MD11) zuführt (besser fördert), was bestätigt, daß die Trennung und Wiederherstellung der Telefonleitung zusammen mit der Wechselspannung von der Zentrale eingetreten ist,
- eine Kopplungseinrichtung (MD14) mit einem Kondensator (C6), welche die phonetischen und digitalen Signale mit minimaler Schwächung überträgt, und
- eine Rückstelleinrichtung (MD8) zur Rücksetzung des Spannungswertes an den Enden der kapazitiven Einrichtung (MD4) auf Null, welche durch die Wechselspannung von der Zentrale während der Pause zwischen Telefonanrufen geladen wird.

2. Zwischentrennvorrichtung für Telefonleitung zur Störungssuche in Telefonleitungsabschnitten nach Anspruch 1, dadurch gekennzeichnet, daß sie auch eine weitere Schutzeinrichtung (MD13) umfaßt, die von einem Entlader (discharger) gebildet wird.

3. Zwischentrennvorichtung für Telefonleitung zur Störungssuche in Telefonleitungsabschnitten nach einem der vorangehenden Ansprüche, dadurch gekennzeichnet, daß die Kopplungseinrichtung (MD14), welche die phonetischen und digitalen Signale umleitet, außer dem Kondensator (C6) einen Widerstand (R8) enthält, der einen Spannungsabfall hervorrufen kann, wenn der Teilnehmer kurzgeschlossen ist.

4. Zwischentrennvorrichtung für Telefonleitung, die zwischen der Verteiler-Telefonleitung (4b) und der Teilnehmerleitung (7) angeordnet ist, zur Störungssuche in den Telefonleitungsabschnitten, welche aufweist:
- eine Einrichtung (MD1') zur Umformung der Wechselspannung der Telefonleitung in eine Gleichspannung sowie zur Stabilisierung dieser Spannung und zur Sperrung der Gleichspannungskomponente der Telefonleitung,
- eine Telefonleitungs-Trenneinrichtung (MD6'), die mit einer Puffer-Oszillatorschaltung (MD8') gekoppelt ist,
- dadurch gekennzeichnet, daß sie ferner aufweist:
- eine Einrichtung (MD2') zur Zuführung einer Hauptbezugsspannung und zwei sehr stabiler Sekundärspannungen,
- eine Einrichtung (MD3'), die mit der Hauptbezugsspannung versorgt wird zur Erzeugung der für die Trennung und Wiederherstellung der Telefonleitung notwendigen Zeitkonstante,
- eine Einrichtung (MD4'), welcher die Sekundärspannungen zugeführt werden zum Vergleich der zwei Sekundärspannungen und zur Lieferung an ihren beiden Ausgängen als Ergebnis dieses Vergleichs zweier logischer Werte, die von 0 auf 1 mit einer auf die erzeugten Zeitkonstanten bezogenen Verzögerung umgeschaltet werden, und
- eine Einrichtung (MD5') zur Umformung der Spannungen an ihren Eingängen auf einen Impuls in der Größenordnung einiger Millisekunden, wobei die Folge von zwei solchen Impulsen auf die Telefonleitungs-Trenneinrichtung (MD6') gegeben wird zur Auslösung der Trennung und Wiederherstellung der Telefonleitung.

5. Zwischentrennvorrichtung für Telefonleitung zur Störungssuche in den Telefonleitungsabschnitten nach Anspruch 4, dadurch gekennzeichnet, daß die Betriebsspannung der Zwischentrennvorrichtung für die Leitung 18 - 20 V rms (effektiver Mittelwert) bei einer Frequenz von 50 - 55 Hz für eine einstellbare Länge von etwa 2,5 Sekunden beträgt.

6. Zwischentrennvorrichtung für Telefonleitung zur Störungssuche in den Telefonleitungsabschnitten nach den Ansprüchen 4 und 5, dadurch gekennzeichnet, daß sie einen Modul (MD7') enthält, um zu verhindern, daß die Trennspannung zum Teilnehmer geliefert wird, und einen inneren Schutz der ganzen Vorrichtung gewährleisten kann.

7. Zwischentrennvorrichtung für Telefonleitung zur Störungssuche in den Telefonleitungsabschnitten nach den Ansprüchen 4 bis 6, dadurch gekennzeichnet, daß sie einen Modul (MD9') enthält, der geeignet ist, die Trennschaltung zurückzusetzen und die Telefonleitung wiederherzustellen, wenn der Teilnehmer einen Telefonanruf empfängt.

8. Verfahren zur Erzeugung einer Telefonleitungs-Zwischentrennung unter Anwendung einer Vorrichtung nach den Ansprüchen 1 oder 5, hei welchem die Erfassung durchgeführt wird, indem eine spezielle Spannung von der Zentrale während einer veränderlichen Zeitspanne geliefert wird, mittels welcher die Leitungszwischentrennvorrichtung die Kontakte öffnet, um die Telefonleitung der Teilnehmeranlage abzutrennen und ein Signal veränderlicher Frequenze erzeugt, welches zu der Trennspannung addiert wird, dadurch gekennzeichent, daß zur Erfassung der Trennung eine Hauptbezugsspannung und zwei sehr stabile Sekundärbezugspannungen erzeugt werden, die zwei Spannungen auf einen Spannungsvergleicher gegeben werden, welcher die Eingangsspannung mit den zwei Bezugsspannungen vergleicht, wobei das Übersteigen der ersten Bezugsspannung (V2) nach einer einstellbaren Zeitperiode (T1) erfolgt, während das Übersteigen der zweiten Bezugsspannung (V3) nach einer weiteren einstellbaren Zeitperiode (T2) erfolgt, die sich im allgemeinen von der ersten Periode unterscheidet, wodurch das eventuelle Umschalten des logischen Wertes der Ausgangssignale von 0 auf 1 mit einstellbaren Verzögerungszeiten bewirkt wird, wobei die Ausgangssignale auf einen Konverter gegeben werden, der zwei Impulse (einen für jeden Ausgang) mit der Länge einiger Millisekunden erzeugt, wobei die zwei Impulse das Trennsignal bzw. das Wiederherstellungssignal der Telefonleitung sind.

9. Verfahren zur Erzeugung einer Telefonleitungs-Zwischentrennung nach Anspruch 8, bei welchem die Hauptbezugsspannung 2,5 V und die Sekundärbezugsspannungen 1,37 bzw. 1,98 V betragen.

10. Verfahren zur Erzeugung einer Telefonleitungs-Zwischentrennung nach Anspruch 8, dadurch gekennzeichnet, daß das Trennsignal einen Puffer-Oszillator betätigt, welcher ein Sinussignal mit 3000 Hz (± 500 Hz) erzeugt, das über die Telefonleitung zu deren Überwachung auf die Zentrale übertragen wird, und daß ein Vergleich mit einer Bezugsspannung für die eventuelle Wiederherstellung der logischen Werte zum Zurücksetzen des Zeitgebers und zur Wiederherstellung der Telefonleitung, wenn der Teilnehmer einen Telefonanruf empfängt, durchgeführt wird.

## Revendications

1. Dispositif de sectionnement intermédiaire pour ligne téléphonique installé entre la ligne de distribution téléphonique (4b) et la ligne de l'usager (7) pour la détection des problèmes dans les sections de la ligne téléphonique, comprenant:
- des moyens (MD1, MD2, MD3) pour stabiliser un voltage alternatif du central téléphonique à une valeur pré-établie (V1),
- un moyen de sectionnement pour ligne téléphonique (MD12) et un circuit oscillateur (MD11) pour produire un voltage sinusoïdal confirmant que le sectionnement et le rétablissement de la ligne ont eu lieu, caractérisé en ce qu'il comprend aussi:
- un moyen capacitif (MD4) comprenant un capaciteur (C3) qui est chargé par ledit voltage du central téléphonique (V1),
- un moyen (MD5) pour produire des premiers et deuxièmes voltages de référence (V2, V3),
- un premier moyen de commutation (MD6) pour commuter sa sortie de "0" logique digital à "1" quand le voltage (V1) sur ledit moyen capacitif (MD4) dépasse le deuxième voltage de référence (V3),
- un deuxième moyen de commutation (MD7) pour commuter sa sortie de "0" logique digital à "1" quand le voltage (V1) sur ledit moyen capacitif (MD4) dépasse le premier voltage de référence (V2),
- un premier dispositif actif (MD9) formé par un transistor (Q1) qui fournit l'énergie à une première bobine d'un relais à deux phases (K1), sous le contrôle d'un premier moyen de commutation (MD6), quand ce dernier commute sa sortie de "0" à "1" et produisant ainsi le sectionnement de la ligne téléphonique de l'usager (7) à travers la déconnection de deux contacts,
- un deuxième dispositif actif (MD10) comprenant un deuxième transistor (Q2) qui fournit l'énergie à une deuxième bobine du relais (K1), sous le controle d'un deuxième moyen de commutation (MD7), quand ce dernier commute sa sortie de "0" à "1", en fermant ainsi lesdits contacts qui déconnectent la ligne téléphonique de l'usager (7),
- un moyen de sectionnement (MD12) comprenant la première et la deuxième bobine du relais (K1) et alimentant (ou mieux transportant) le voltage sinusoïdal de l'oscillateur (MD11) qui confirme que le sectionnement et le rétablissement de la ligne ont eu lieu ainsi que ledit voltage alternatif du central,
- un moyen de couplage (MD14) comprenant un capaciteur (C6) qui transmet les signaux phoniques et digitaux avec le minimum d'atténuation, et comprenant aussi:
- un moyen de zérotage (MD8) pour mettre à zéro la valeur du voltage aux extrémités dudit moyen capacitif (MD4) chargé par le voltage alternatif du central pendant la pause entre un appel téléphonique et l'autre.

2. Dispositif de sectionnement intermédiaire pour ligne téléphonique visant à la détection des problèmes dans les sections de la ligne téléphonique selon la Revendication 1, caractérisé en ce qu'il comprend aussi un moyen de protection ultérieur (MD13) constitué par un déchargeur.

3. Dispositif de sectionnement intermédiaire pour ligne téléphonique visant à la détection des problèmes dans les sections de la ligne téléphonique selon une quelconque des revendications précédentes, caractérisé en ce que ledit moyen de couplage (MD14) qui court-circuite les signaux phoniques et digitaux comprend, en plus dudit capaciteur (C6), une résistance (R8) qui produit une baisse du voltage quand l'usager est en court-circuit.

4. Dispositif de sectionnement intermédiaire pour ligne téléphonique placé entre la ligne téléphonique de distribution (4b) et la ligne de l'usager (7) pour détecter les problèmes des sections de la ligne téléphonique, comprenant:
- un moyen (MD1') pour transformer le voltage alternatif de la ligne téléphonique en voltage direct ainsi que pour stabiliser ledit voltage et bloquer le composant direct de la ligne téléphonique,
- un moyen de sectionnement de la ligne téléphonique (MD6') couplé avec un circuit oscillateur tampon (MD8'),
caractérisé en ce qu'il comprend aussi:
- un moyen (MD2') pour fournir un voltage de référence principal et deux voltages secondaires très stables,
- un moyen (MD3') alimenté avec le voltage de référence principal pour produire la constante de temps nécessaire au sectionnement et rétablissement de la ligne téléphonique,
- un moyen (MD4') alimenté avec les voltages secondaires pour comparer les deux voltages secondaires et fournir à ses deux sorties, à la suite de ladite comparaison, deux niveaux logiques commutés de 0 à 1 avec un delai relatif aux dites constantes de temps produites, et
- un moyen (MD5') pour transformer les voltages à ses sorties en une impulsion de l'ordre de quelques millisecondes, la succession de deux de ces impulsions étant appliquée audit moyen de sectionnement de la ligne téléphonique (MD6') pour activer le sectionnement et rétablissement de la ligne téléphonique.

5. Dispositif de sectionnement intermédiaire pour ligne téléphonique visant à la détection des problèmes dans les sections de la ligne téléphonique selon la Revendication 4, caractérisé en ce que le voltage opératif du dispositif de sectionnement intermédiaire pour la ligne est 18-20 volts rms avec une fréquence de 50-55 Hz pour une durée réglable de quelque 2,5 secondes.

6. Dispositif de sectionnement intermédiaire pour ligne téléphonique visant à la détection des problèmes dans les sections de la ligne téléphonique selon les Revendications 4 et 5, caractérisé en ce qu'il comprend un module (MD7') pour empêcher que le voltage de sectionnement soit fourni à l'usager et étant adapté pour assurer une protection intrinsèque du dispositif dans son ensemble.

7. Dispositif de sectionnement intermédiaire pour ligne téléphonique visant à la détection des problèmes dans les sections de la ligne téléphonique selon les Revendications de 4 à 6, caractérisé en ce qu'il comprend un module (MD9') adapté pour remettre à zéro le circuit de sectionnement et pour rétablir la ligne téléphonique quand l'usager reçoit un appel téléphonique.

8. Procédé pour accomplir le sectionnement intermédiaire de la ligne télèphonique en utilisant un dispositif selon les Revendications 1 ou 5, où la détection est accomplie en fournissant un voltage spécial du central pendant une période de temps variable, qui permet au dispositif intermédiaire de sectionnement de la ligne d'ouvrir les contacts pour sectionner la ligne téléphonique de l'installation de l'usager et de produire un signal de fréquence variable qui s'ajoute audit voltage de sectionnement, caractérisé en ce que, pour détecter le sectionnement, un voltage principal de référence et deux voltages secondaires très stables sont produits, lesdites deux voltages étant appliqués à un comparateur de voltages qui compare le voltage d'entrée aux deux voltages de référence, le dépassement du premier voltage de référence (V2) ayant lieu après une période de temps réglable (T1), alors que le dépassement du deuxième voltage de référence (V3) ayant lieu après une période de temps réglable ultérieure (T2) qui d'habitude diffère de la première période, en produisant ainsi la commutation finale du niveau logique des sorties de 0 à 1 avec des delais réglables, lesdites sorties étant appliquées à un convertisseur qui produit deux impulsions (une pour chaque sortie) ayant la durée de quelques millisecondes, lesdites deux impulsions étant, respectivement, le signal de sectionnement et le signal de rétablissement de la ligne téléphonique.

9. Procédé pour accomplir le sectionnement intermédiaire de la ligne téléphonique selon la Revendication 8, où le voltage principal de référence est 2,5 volts et les voltages secondaires de référence sont, respectivement, 1,37 et 1,98 volts.

10. Procédé pour accomplir le sectionnement intermédiaire de la ligne téléphonique selon la Revendication 8, caractérisé en ce que le signal de sectionnement met en fonction un oscillateur tampon qui produit un signal sinusoïdal à 3000 Hz (± 500 Hz) qui est fourni à travers la ligne téléphonique au central pour son contrôle, et en ce que une comparaison est effectuée avec un voltage de référence pour rétablir finalement les niveaux logiques nécessaires à remettre à zéro le timer et rétablir la ligne téléphonique quand l'usager reçoit un appel téléphonique.
